# EUROPEAN PATENT SPECIFICATION

(11) **EP 3 249 819 B1**
(45) Date of publication and mention of the grant of the patent: **19.06.2019**
(21) Application number: 15886934.7
(22) Date of filing: 01.04.2015
(51) Int. Cl.: H04B 10/58, H04B 10/2543, H04B 1/62, H04B 1/04, H04L 27/36

(54) **LOOKUP TABLE GENERATION METHOD AND DEVICE, AND PRE-COMPENSATION METHOD AND DEVICE**
UMSETZUNGSTABELLENERZEUGUNGSVERFAHREN UND -VORRICHTUNG UND VORKOMPENSIERUNGSVERFAHREN UND -VORRICHTUNG
PROCÉDÉ ET DISPOSITIF DE GÉNÉRATION DE TABLE DE CONSULTATION AINSI QUE PROCÉDÉ ET DISPOSITIF DE PRÉCOMPENSATION

(43) Date of publication of application: 29.11.2017
(73) Proprietor: Huawei Technologies Co. Ltd., Shenzhen, Guangdong 518129 (CN)
(72) Inventor: KE, Jianhong, Shenzhen Guangdong 518129 (CN); TANG, Xuefeng, Shenzhen Guangdong 518129 (CN); LI, Chuandong, Shenzhen Guangdong 518129 (CN); ZHANG, Zhuhong, Shenzhen Guangdong 518129 (CN); CHEN, Jun, Shenzhen Guangdong 518129 (CN); CAI, Zhongheng, Shenzhen Guangdong 518129 (CN)
(74) Representative: Goddar, Heinz J.
(86) International application number: PCT/CN2015/075687
(87) International publication number: WO 2016/154964

(56) References cited:
- CN-A- 101 123 594
- CN-A- 104 303 422
- US-A1- 2004 197 103
- US-A1- 2007 098 111
- US-A1- 2012 081 780
- US-A1- 2013 185 345

## Description

### TECHNICAL FIELD

The present invention relates to the field of communications technologies, and in particular, to a lookup table generation method and apparatus and a pre-compensation method and apparatus.

### BACKGROUND

In an optical communications system, a non-linear effect exists in an actual driver amplifier and modulator, and a non-linear effect such as self-phase modulation also exists in an optical fiber; therefore, non-linear degradation of amplitude and a phase that are based on a symbol sequence exists in a signal received by the optical communications system.

In digital signal processing (DSP, Digital Signal Processing), a method of pre-compensating a non-linear effect of a system by using a lookup table (LUT, Lookup Table) that is based on a symbol sequence has been proved to be an effective method for reducing the non-linear effect of the system. Currently, a widely used non-linear pre-compensation solution is as follows: Before electrical/optical conversion and transmission by using an optical link of a communications system, an input communication signal is processed in an electrical domain to compensate signal distortion introduced by non-linearity. For example, an electrical input signal is digitally processed by using a compensation operator, so as to generate a predistorted electrical signal, and an optical source is modulated by using the corresponding predistorted electrical signal, so as to generate a predistorted optical signal transmitted in the optical communications system.

An LUT needs to be used in a step of digitally processing an electrical input signal, and an LUT may be generated by using the following method: calculating a value of a predistorted electrical signal corresponding to each symbol sequence in a preset group of N symbol sequence (an N symbol sequence refers to a symbol sequence whose length is N), and correspondingly storing each calculated value and a symbol sequence from which the calculated value is obtained, so as to generate an LUT. In a process of digitally processing an electrical input signal, the electrical input signal needs to be converted to a series of K-bit words, and each K-bit word is used as an index value for accessing a corresponding register of a lookup table.

A 16 quadrature amplitude modulation (QAM, Quadrate Amplitude Modulation) modulation mode is used as an example. When an electrical input signal is a two-level signal, and if a length of a symbol sequence is N, resources of an LUT are equal to 2ⁿ; when an electrical input signal is a four-level signal, and if a length of a symbol sequence is N, resources of an LUT are equal to 4ⁿ. If a better compensation effect needs to be acquired, N generally needs to be a larger value. In this way, resources of an LUT exponentially increase. In addition, with an increase in a modulation mode of a signal, a quantity of levels of an electrical input signal also increases, which also makes resources of an LUT increase sharply.

In conclusion, a current LUT stores a non-linear deviation value of an N symbol sequence; therefore, as N increases, resources of the LUT increase exponentially.

US 2004/197103 A1 discloses nonlinearity-induced signal distortions compensated by processing an input communications signal, in the electrical domain prior to electrical-to-optical conversion and transmission through an optical link of a communications system. According to the disclosure, a compensation operator is determined that substantially mitigates the nonlinearity-induced signal distortions imparted to an optical signal traversing the communications system. The input communications signal is then input to the compensation operator to generate a predistorted electrical signal. This predistorted electrical signal is then used to modulate an optical source to generate a corresponding predistorted optical signal for transmission through the optical communications system. With this arrangement, arbitrary nonlinearity-induced signal distortions imparted by the optical link can be compensated in such a manner that a comparatively undistorted optical signal is obtained at the receiving end of the optical link.

US 2012/081780 A1 discloses systems and methods to process an optical signal using a pre-processor to populate a non-linearity compensation data structure based on a set of predetermined rules in a non-real-time off-line mode; and an amplifier applying said predetermined rules in real-time to one or more channel input data using the data structure to determinea non-linearity compensation output.

### SUMMARY

Embodiments of the present invention provide a lookup table generation method and apparatus and a pre-compensation method and apparatus, so as to resolve a current problem that resources of an LUT that stores a non-linear deviation value of an N symbol sequence increase exponentially with an increase in N.

According to a first aspect, a lookup table generation method is provided, including:
dividing a first symbol sequence into two symbol sub-sequences, where symbols that are from the first symbol to a center symbol in the first symbol sequence form one symbol sub-sequence, and symbols that are from the center symbol to the last symbol in the first symbol sequence form the other symbol sub-sequence; the first symbol sequence is any symbol sequence in a preset group of N symbol sequences of a length of N symbols each; when N is an odd number, the center symbol is the (N+1)/2^{th} symbol in the first symbol sequence, and when N is an even number, the center symbol is the N/2^{th} symbol or the N/2+1^{th} symbol in the first symbol sequence; and N is an integer not less than 3;
performing statistical averaging on each symbol sub-sequence, and calculating a non-linear deviation value of the symbol sub-sequence according to a result of statistical averaging;
correspondingly storing the symbol sub-sequence in which the center symbol is the last symbol and a non-linear deviation value of the symbol sub-sequence to form a first lookup table in a cascaded lookup table; and
correspondingly storing the symbol sub-sequence in which the center symbol is the first symbol and a non-linear deviation value of the symbol sub-sequence to form a second lookup table in the cascaded lookup table.

When N is greater than 3, the method further includes:
reducing a quantity of levels in possible levels of each of one or more edge symbols except a highest level and a lowest level, where the one or more edge symbols are a symbol in the first symbol sequence or a sub-symbol sequence except the center symbol and a symbol adjacent to the center symbol.

With reference to the first aspect, in a first possible implementation manner, when a quantity of symbols between a first edge symbol and the center symbol is less than a quantity of symbols between a second edge symbol and the center symbol, a quantity of possible levels of the first edge symbol after the quantity of levels is reduced is not less than a quantity of possible levels of the second edge symbol after the quantity of levels is reduced, where
the first edge symbol, the second edge symbol, and the center symbol are all included in a same symbol sequence.

According to a second aspect, a lookup table generation apparatus is provided, including:
a division module, configured to divide a first symbol sequence into two symbol sub-sequences, where symbols that are from the first symbol to a center symbol in the first symbol sequence form one -symbol sub-sequence, and symbols that are from the center symbol to the last symbol in the first symbol sequence form the other symbol sub-sequence; the first symbol sequence is any symbol sequence in a preset group of N symbol sequences of a length of N symbols each; when N is an odd number, the center symbol is the (N+1)/2^{th} symbol in the first symbol sequence, and when N is an even number, the center symbol is the N/2^{th} symbol or the N/2+1^{th} symbol in the first symbol sequence; and N is an integer not less than 3;
a calculation module, configured to perform statistical averaging on each symbol sub-sequence, and calculate a non-linear deviation value of the symbol sub-sequence according to a result of statistical averaging; and
a construction module, configured to correspondingly store the symbol sub-sequence in which the center symbol is the last symbol and a non-linear deviation value of the symbol sub-sequence to form a first lookup table in a cascaded lookup table, and correspondingly store a symbol sub-sequence in which the center symbol is the first symbol and a non-linear deviation value of the symbol sub-sequence to form a second lookup table in the cascaded lookup table,
   wherein when N is greater than 3, the apparatus further includes a compression module; and
the compression module is configured to reduce a quantity of levels in possible levels of each of one or more edge symbols except a highest level and a lowest level, wherein the one or more edge symbols are a symbol in the first symbol sequence or a symbol sub-sequence except the center symbol and a symbol adjacent to the center symbol.

With reference to the second aspect, in a first possible implementation manner, when a quantity of symbols between a first edge symbol and the center symbol is less than a quantity of symbols between a second edge symbol and the center symbol, a quantity of possible levels of the first edge symbol after the quantity of levels is reduced is not less than a quantity of possible levels of the second edge symbol after the quantity of levels is reduced, where
the first edge symbol, the second edge symbol, and the center symbol are all included in a same symbol sequence.

According to a third aspect, a pre-compensation method for performing, by using a first lookup table and a second lookup table that are generated by using the lookup table generation method according to the first aspect, compensation on a series of N symbol sequences of a length of N symbols each divided from an electrical input signal includes:
for an N symbol sequence of the series of N symbol sequences, searching the first lookup table for a non-linear deviation value of a symbol sub-sequence that includes symbols that are from the first symbol to a center symbol in the N symbol sequence, and searching the second lookup table for a non-linear deviation value of a symbol sub-sequence that includes symbols that are from the center symbol to the last symbol in the N symbol sequence; and
summating the N symbol sequence, the non-linear deviation value found from the first lookup table, and the non-linear deviation value found from the second lookup table, to obtain a predistorted symbol sequence of the N symbol sequence.

According to a fourth aspect, a pre-compensation apparatus configured to perform, by using a first lookup table and a second lookup table that are generated by using the lookup table generation method according to the first aspect, compensation on a series of N symbol sequences of a length of N symbols each divided from an electrical input signal, wherein the pre-compensation apparatus includes:
a search module, configured to: for an N symbol sequence of the series of N symbol sequences, search the first lookup table for a non-linear deviation value of a symbol sub-sequence that includes symbols that are from the first symbol to a center symbol in the N symbol sequence, and search the second lookup table for a non-linear deviation value of a symbol sub-sequence that includes symbols that are from the center symbol to the last symbol in the N symbol sequence; and
a summation module, configured to summate the N symbol sequence, the non-linear deviation value found from the first lookup table, and the non-linear deviation value found from the second lookup table, to obtain a predistorted symbol sequence of the N symbol sequence.

Beneficial effects of the embodiments of the present invention include:
According to the lookup table generation method and apparatus and the pre-compensation method and apparatus provided in the embodiments of the present invention, when a lookup table is generated, each N symbol sequence is divided into two sub-symbol sequences, a non-linear deviation value of each sub-symbol sequence is calculated, a sub-symbol sequence in which a center symbol is the last symbol and a non-linear deviation value of the sub-symbol sequence is correspondingly stored to form a first lookup table in a cascaded lookup table, and a sub-symbol sequence in which the center symbol is the first symbol and a non-linear deviation value of the sub-symbol sequence is correspondingly stored to form a second lookup table in the cascaded lookup table. That is, an LUT in the prior art is divided into a first LUT and a second LUT that are in a cascaded LUT; however, a summation of resources of the first LUT and resources of the second LUT is far less than resources of the LUT in the prior art. Therefore, if lengths of symbol sequences are equal, resources of an LUT generated according to the LUT generation method provided in the embodiments of the present invention are less than resources of an LUT generated in the prior art. In this way, a length of a symbol sequence may be longer in a condition of same hardware resources, so that a better compensation effect is implemented.

### BRIEF DESCRIPTION OF DRAWINGS

FIG. 1 is a flowchart 1 of a lookup table generation method according to an embodiment of the present invention;
FIG. 2 is a schematic diagram 1 in which one N symbol sequence is divided into two sub-symbol sequences;
FIG. 3 is a flowchart 2 of a lookup table generation method according to an embodiment of the present invention;
FIG. 4 is a schematic diagram of possible levels of each symbol after a quantity of possible levels of an edge symbol in an N symbol sequence is reduced;
FIG. 5 is a flowchart 3 of a lookup table generation method according to an embodiment of the present invention;
FIG. 6 is a schematic diagram of possible levels of each symbol after a quantity of possible levels of an edge symbol in two sub-symbol sequences that are divided from one N symbol sequence is reduced;
FIG. 7 is a schematic diagram 2 in which one N symbol sequence is divided into two sub-symbol sequences;
FIG. 8 is a schematic structural diagram 1 of a lookup table generation apparatus according to an embodiment of the present invention;
FIG. 9a is a schematic structural diagram 2 of a lookup table generation apparatus according to an embodiment of the present invention;
FIG. 9b is a schematic structural diagram 3 of a lookup table generation apparatus according to an embodiment of the present invention;
FIG. 10 is a flowchart of a pre-compensation method according to an embodiment of the present invention;
FIG. 11 is a block diagram for implementing a pre-compensation method according to an embodiment of the present invention; and
FIG. 12 is a schematic structural diagram of a pre-compensation apparatus according to an embodiment of the present invention.

### DESCRIPTION OF EMBODIMENTS

In a lookup table generation method and apparatus and a pre-compensation method and apparatus provided in embodiments of the present invention, an N symbol sequence is divided into two sub-symbol sequences, so as to generate two cascaded LUTs. In this way, if lengths of symbol sequences are equal, resources of an LUT generated according to the LUT generation method provided in the embodiments of the present invention are less than resources of an LUT generated in the prior art. Therefore, a length of a symbol sequence may be longer in a condition of same hardware resources, so that a better compensation effect is implemented.

The following describes, with reference to the accompanying drawings of the specification, specific implementation manners of a lookup table generation method and apparatus and a pre-compensation method and apparatus provided in the embodiments of the present invention.

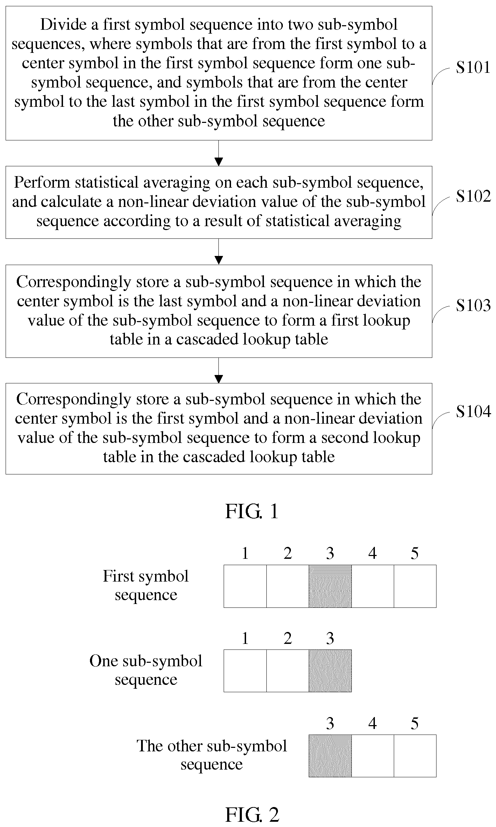

As shown in FIG. 1, a lookup table generation method provided in an embodiment of the present invention includes:
S101. Divide a first symbol sequence into two sub-symbol sequences, where symbols that are from the first symbol to a center symbol in the first symbol sequence form one sub-symbol sequence, and symbols that are from the center symbol to the last symbol in the first symbol sequence form the other sub-symbol sequence; the first symbol sequence is any symbol sequence in a preset group of N symbol sequences; when N is an odd number, the center symbol is the (N+1)/2^{th} symbol in the first symbol sequence, and when N is an even number, the center symbol is the N/2^{th} symbol or the N/2+1^{th} symbol in the first symbol sequence; and N is an integer not less than 3.
S102. Perform statistical averaging on each sub-symbol sequence, and calculate a non-linear deviation value of the sub-symbol sequence according to a result of statistical averaging.
S103. Correspondingly store a sub-symbol sequence in which the center symbol is the last symbol and a non-linear deviation value of the sub-symbol sequence to form a first lookup table in a cascaded lookup table.
S104. Correspondingly store a sub-symbol sequence in which the center symbol is the first symbol and a non-linear deviation value of the sub-symbol sequence to form a second lookup table in the cascaded lookup table.
S103 and S104 do not necessarily occur in a time order. S103 may be first performed, and then S104 is performed; or S104 may be first performed, and then S103 is performed; or S103 and S104 may be performed simultaneously.

N=5 is used as an example. FIG. 2 is a schematic structural diagram of a first symbol sequence, where each block is a symbol, and a gray block is a center symbol. The first symbol sequence includes the first symbol 1, the second symbol 2, the third symbol 3, the fourth symbol 4, and the fifth symbol 5, where the third symbol 3 is the center symbol. In S101, the first symbol sequence is divided into the two sub-symbol sequences by using the center symbol as a boundary, where one sub-symbol sequence includes the first symbol 1, the second symbol 2, and the third symbol 3 that are in the first symbol sequence, and the other sub-symbol sequence includes the third symbol 3, the fourth symbol 4, and the fifth symbol 5 that are in the first symbol sequence.

It is assumed that a quantity of possible levels of each symbol in the first symbol sequence is k, and then resources of an LUT are k^{N} when the LUT is generated according to the prior art. When N is an odd number, resources of an LUT that is generated according to the LUT generation method provided in this embodiment of the present invention are 2^{∗}k^{(N+1)/2}; when N is an even number, resources of an LUT that is generated according to the LUT generation method provided in this embodiment of the present invention are 5^{∗}k^{N/2}. Therefore, a length of a symbol sequence may be longer in a condition of same hardware resources, so that a better compensation effect is implemented.

In a symbol sequence, when an edge symbol is farther away from a center symbol, the edge symbol has less impact on the center symbol. Therefore, after a quantity of possible levels of the edge symbol is reduced, the impact on the center symbol becomes less. In this way, resources of an LUT may be further reduced.

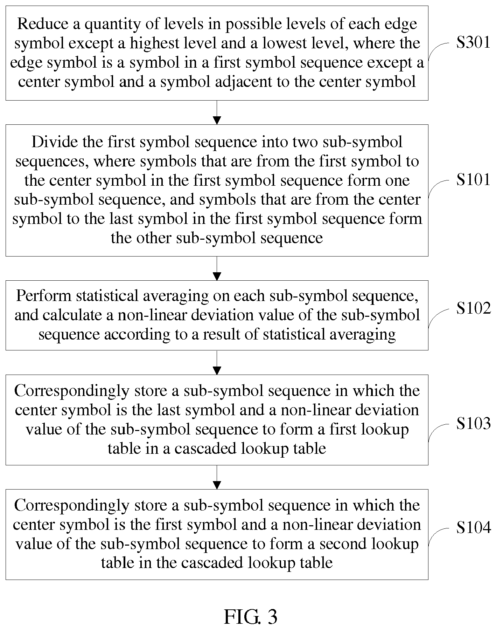

Therefore, optionally, when N is greater than 3, as shown in FIG. 3, the LUT generation method provided in this embodiment of the present invention further includes:
S301. Reduce a quantity of levels in possible levels of each edge symbol except a highest level and a lowest level, where the edge symbol is a symbol in the first symbol sequence except the center symbol and a symbol adjacent to the center symbol.

In this case, S301 is performed before S101. That is, before the first symbol sequence is divided into the two sub-symbol sequences, the quantity of levels in the possible levels of each edge symbol in the first symbol sequence except the highest level and the lowest level is reduced.

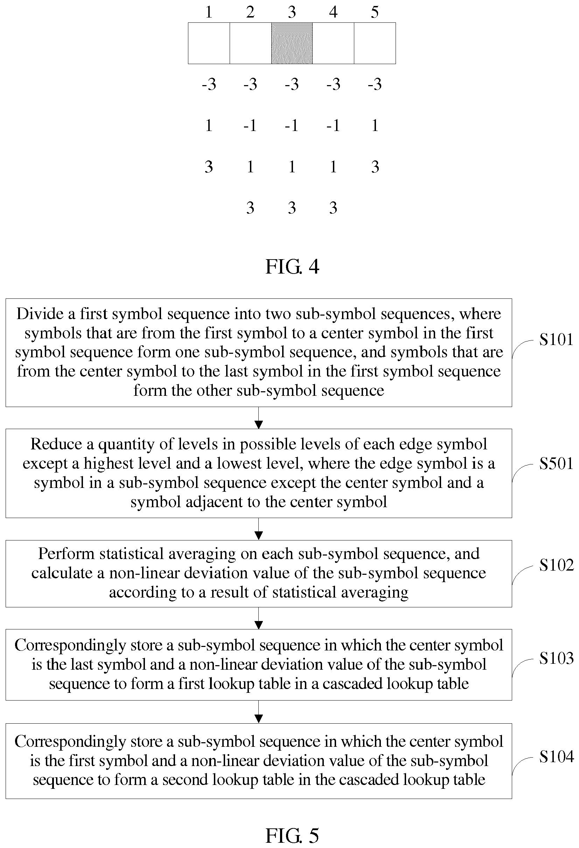

N=5 and a 16QAM modulation mode are used as an example. FIG. 4 is a schematic structural diagram of a first symbol sequence, where each block is a symbol, and a gray block is a center symbol. The first symbol sequence includes the first symbol 1, the second symbol 2, the third symbol 3, the fourth symbol 4, and the fifth symbol 5, where the third symbol 3 is the center symbol. Possible levels of each symbol in the first symbol sequence are -3, -1, 1, and 3. Because the first symbol 1 in the first symbol sequence is relatively far away from the center symbol, a quantity of possible levels of the first symbol 1 may be reduced, that is, a quantity of possible values of the first symbol 1 is reduced. In this way, the possible levels of the first symbol 1 may be -3, 1, and 3, or may be -3, -1, and 3. Likewise, after a quantity of possible levels of the fifth symbol 5 in the first symbol sequence is reduced, the possible levels of the fifth symbol 5 may be -3, 1, and 3, or may be -3, -1, and 3.

Alternatively, when N is greater than 3, as shown in FIG. 5, the LUT generation method provided in this embodiment of the present invention further includes:
S501. Reduce a quantity of levels in possible levels of each edge symbol except a highest level and a lowest level, where the edge symbol is a symbol in a sub-symbol sequence except the center symbol and a symbol adjacent to the center symbol.

In this case, S501 is performed after S101. That is, after the first symbol sequence is divided into the two sub-symbol sequences, the quantity of levels in the possible levels of each edge symbol in the sub-symbol sequence except the highest level and the lowest level is reduced.

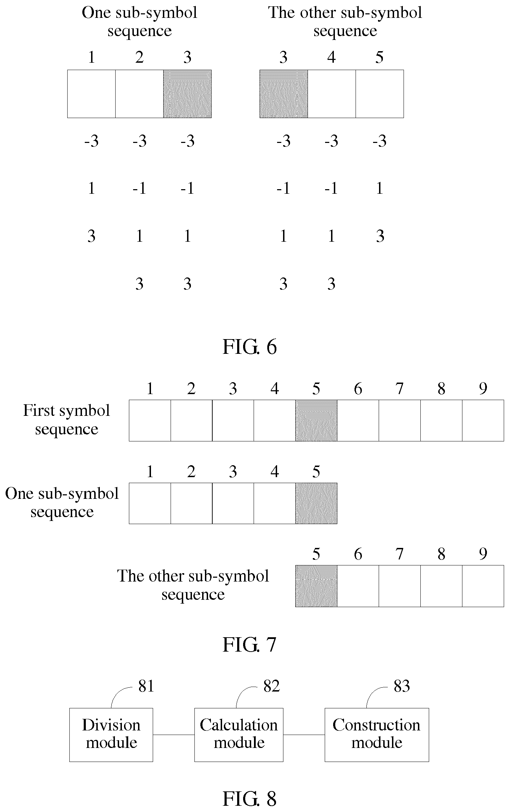

N=5 and a 16QAM modulation mode are used as an example. FIG. 6 is a schematic structural diagram of two sub-symbol sequences divided from a first symbol sequence, where each block is a symbol, and a gray block is a center symbol. One sub-symbol sequence includes the first symbol 1, the second symbol 2, and the third symbol 3, and the other sub-symbol sequence includes the third symbol 3, the fourth symbol 4, and the fifth symbol 5, where the third symbol 3 is the center symbol. Possible levels of each symbol in each sub-symbol sequence are -3, -1, 1, and 3. Because the first symbol 1 in the one sub-symbol sequence is relatively far away from the center symbol, a quantity of possible levels of the first symbol 1 may be reduced, that is, a quantity of possible values of the first symbol 1 is reduced. In this way, the possible levels of the first symbol 1 may be -3, 1, and 3, or may be -3, -1, and 3. Likewise, after a quantity of possible levels of the fifth symbol 5 in the other sub-symbol sequence is reduced, the possible levels of the fifth symbol 5 may be -3, 1, and 3, or may be -3, -1, and 3.

Optionally, when a quantity of symbols between a first edge symbol and the center symbol is less than a quantity of symbols between a second edge symbol and the center symbol, a quantity of possible levels of the first edge symbol after the quantity of levels is reduced is not less than a quantity of possible levels of the second edge symbol after the quantity of levels is reduced.

The first edge symbol, the second edge symbol, and the center symbol are all included in a same symbol sequence, that is, the first edge symbol, the second edge symbol, and the center symbol may all be included in a same first symbol sequence, or may all be included in a same sub-symbol sequence.

N=9 and a 64QAM modulation mode are used as an example. FIG. 7 is a schematic structural diagram of a first symbol sequence, where each block is a symbol, and a gray block is a center symbol. The first symbol sequence includes the first symbol 1, the second symbol 2, the third symbol 3, the fourth symbol 4, the fifth symbol 5, the sixth symbol 6, the seventh symbol 7, the eighth symbol 8, and the ninth symbol 9; the fifth symbol 5 is the center symbol, and the first symbol 1, the second symbol 2, the third symbol 3, the seventh symbol 7, the eighth symbol 8, and the ninth symbol 9 are all edge symbols. A quantity of possible levels of each symbol in the first symbol sequence is 8. After a quantity of levels of an edge symbol is reduced, a quantity of possible levels of the third symbol 3 is not less than a quantity of possible levels of the first symbol 1, and is also not less than a quantity of possible levels of the second symbol 2. Likewise, after a quantity of levels of an edge symbol is reduced, a quantity of possible levels of the seventh symbol 7 is not less than a quantity of possible levels of the eighth symbol 8, and is also not less than a quantity of possible levels of the ninth symbol 9.

Likewise, when the first symbol sequence in FIG. 7 is divided into two sub-symbol sequences, one sub-symbol sequence includes the first symbol 1, the second symbol 2, the third symbol 3, the fourth symbol 4, and the fifth symbol 5, and the other sub-symbol sequence includes the fifth symbol 5, the sixth symbol 6, the seventh symbol 7, the eighth symbol 8, and the ninth symbol 9. After a quantity of levels of an edge symbol is reduced, in one sub-symbol sequence, a quantity of possible levels of the third symbol 3 is not less than a quantity of possible levels of the first symbol 1, and is also not less than a quantity of possible levels of the second symbol 2; likewise, after a quantity of levels of an edge symbol is reduced, in the other sub-symbol sequence, a quantity of possible levels of the seventh symbol 7 is not less than a quantity of possible levels of the eighth symbol 8, and is also not less than a quantity of possible levels of the ninth symbol 9.

Based on a same inventive concept, an embodiment of the present invention further provides a lookup table generation apparatus. A problem-solving principle of the apparatus is similar to the foregoing lookup table generation method; therefore, for implementation of the apparatus, reference may be made to implementation of the foregoing method, and no repeated description is provided.

As shown in FIG. 8, the lookup table generation apparatus provided in this embodiment of the present invention includes:
a division module 81, configured to divide a first symbol sequence into two sub-symbol sequences, where symbols that are from the first symbol to a center symbol in the first symbol sequence form one sub-symbol sequence, and symbols that are from the center symbol to the last symbol in the first symbol sequence form the other sub-symbol sequence; the first symbol sequence is any symbol sequence in a preset group of N symbol sequences; when N is an odd number, the center symbol is the (N+1)/2^{th} symbol in the first symbol sequence, and when N is an even number, the center symbol is the N/2^{th} symbol or the N/2+1^{th} symbol in the first symbol sequence; and N is an integer not less than 3;
a calculation module 82, configured to perform statistical averaging on each sub-symbol sequence, and calculate a non-linear deviation value of the sub-symbol sequence according to a result of statistical averaging; and
a construction module 83, configured to correspondingly store a sub-symbol sequence in which the center symbol is the last symbol and a non-linear deviation value of the sub-symbol sequence to form a first lookup table in a cascaded lookup table, and correspondingly store a sub-symbol sequence in which the center symbol is the first symbol and a non-linear deviation value of the sub-symbol sequence to form a second lookup table in the cascaded lookup table.

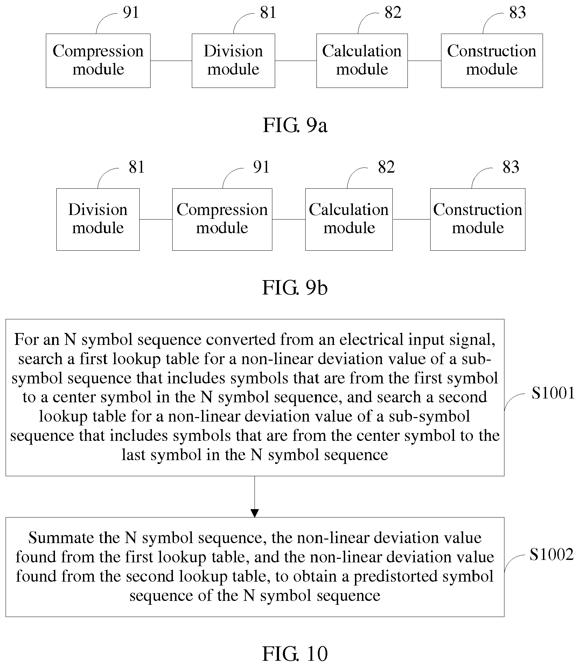

Optionally, when N is greater than 3, as shown in FIG. 9a or FIG. 9b, the lookup table generation apparatus provided in this embodiment of the present invention further includes a compression module 91; and
the compression module 91 is configured to reduce a quantity of levels in possible levels of each edge symbol except a highest level and a lowest level, where the edge symbol is a symbol in the first symbol sequence or a sub-symbol sequence except the center symbol and a symbol adjacent to the center symbol.

An embodiment of the present invention further provides a pre-compensation method that is based on a lookup table generation method provided in an embodiment of the present invention. As shown in FIG. 10, the method includes:
S1001. For an N symbol sequence converted from an electrical input signal, search a first lookup table for a non-linear deviation value of a sub-symbol sequence that includes symbols that are from the first symbol to a center symbol in the N symbol sequence, and search a second lookup table for a non-linear deviation value of a sub-symbol sequence that includes symbols that are from the center symbol to the last symbol in the N symbol sequence.
S1002. Summate the N symbol sequence, the non-linear deviation value found from the first lookup table, and the non-linear deviation value found from the second lookup table, to obtain a predistorted symbol sequence of the N symbol sequence.

It is assumed that an N symbol sequence is 3, a non-linear deviation value that is found from a first lookup table and that is of a sub-symbol sequence that includes symbols that are from the first symbol to a center symbol in the N symbol sequence is 0.1, and a non-linear deviation value that is found from a second lookup table and that is of a sub-symbol sequence that includes symbols that are from the center symbol to the last symbol in the N symbol sequence is 0.2. Then, a predistorted symbol sequence of the N symbol sequence is 3+0.1+0.2=3.3.

In an actual application process, when compensation is performed on a series of N symbol sequences converted from an electrical input signal, each N symbol sequence needs to be converted to an M-bit word, where M=n^{∗}N, n is a value obtained after log₂k is rounded up, N is a quantity of symbols in the N symbol sequence, and k is a quantity of possible levels of a center symbol in the N symbol sequence. Then, a bit word that is in the M-bit word and that is converted from a sub-symbol sequence in which the center symbol is the last symbol is used as an index value for accessing a corresponding register of a first lookup table, so as to read a non-linear deviation value stored in the register; a bit word that is in the M-bit word and that is converted from a sub-symbol sequence in which the center symbol is the first symbol is used as an index value for accessing a corresponding register of a second lookup table, so as to read a non-linear deviation value stored in the register; and the M-bit word and the two read non-linear deviation values are summated to obtain a predistorted symbol sequence.

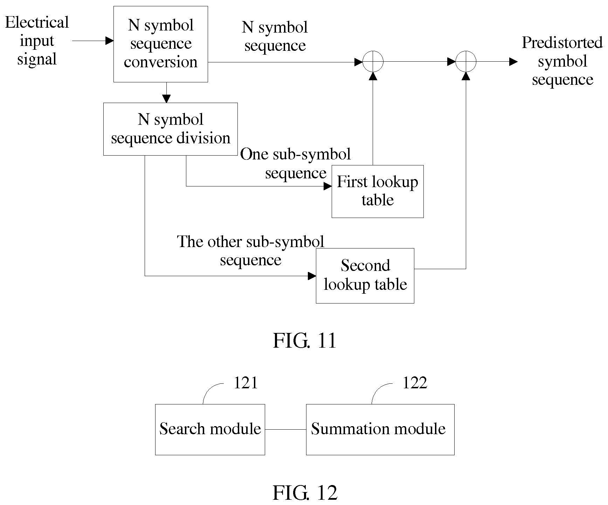

A structural block diagram for implementing the pre-compensation method provided in this embodiment of the present invention is shown in FIG. 11, where a center symbol is the last symbol in one sub-symbol sequence, and the center symbol is the first symbol in another sub-symbol sequence. An N symbol sequence, a non-linear deviation value found from a first lookup table, and a non-linear deviation value found from a second lookup table are summated to obtain a predistorted symbol sequence.

Based on a same inventive concept, an embodiment of the present invention further provides a pre-compensation apparatus. A problem-solving principle of the apparatus is similar to the foregoing pre-compensation method; therefore, for implementation of the apparatus, reference may be made to implementation of the foregoing method, and no repeated description is provided.

The pre-compensation apparatus that is based on a lookup table generation method provided in an embodiment of the present invention and is provided in this embodiment of the present invention is shown in FIG. 12, and the apparatus includes:
a search module 121, configured to: for an N symbol sequence converted from an electrical input signal, search a first lookup table for a non-linear deviation value of a sub-symbol sequence that includes symbols that are from the first symbol to a center symbol in the N symbol sequence, and search a second lookup table for a non-linear deviation value of a sub-symbol sequence that includes symbols that are from the center symbol to the last symbol in the N symbol sequence; and
a summation module 122, configured to summate the N symbol sequence, the non-linear deviation value found from the first lookup table, and the non-linear deviation value found from the second lookup table, to obtain a predistorted symbol sequence of the N symbol sequence.

If lengths of symbol sequences are equal, resources of an LUT generated according to an LUT generation method provided in an embodiment of the present invention are less than resources of an LUT generated in the prior art. Therefore, a length of a symbol sequence may be longer, so that a better compensation effect is implemented; that is, in a condition of same hardware resources, an effect of a pre-compensation method provided in an embodiment of the present invention is better.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, persons skilled in the art can make various modifications and variations to the embodiments of the present invention without departing from the and scope of the embodiments of the present invention. The present invention is intended to cover these modifications and variations provided that they fall within the scope of protection defined by the following claims.

## Claims

1. A lookup table generation method, comprising:
dividing (S101) a first symbol sequence into two symbol sub-sequences, wherein symbols that are from the first symbol to a center symbol in the first symbol sequence form one symbol sub-sequence, and symbols that are from the center symbol to the last symbol in the first symbol sequence form the other symbol sub-sequence; the first symbol sequence is any symbol sequence in a preset group of N symbol sequences of a length of N symbols each; when N is an odd number, the center symbol is the (N+1)/2^{th} symbol in the first symbol sequence, and when N is an even number, the center symbol is the N/2^{th} symbol or the N/2+1^{th} symbol in the first symbol sequence; and N is an integer not less than 3;
performing (S102) statistical averaging on each symbol sub-sequence, and calculating a corresponding non-linear deviation value according to a result of the statistical averaging;
correspondingly storing (SI03) the symbol sub-sequence in which the center symbol is the last symbol and the corresponding non-linear deviation value of the symbol sub-sequence to form a first lookup table in a cascaded lookup table; and
correspondingly storing (S104) the symbol sub-sequence in which the center symbol is the first symbol and the corresponding non-linear deviation value of the symbol sub-sequence to form a second lookup table in the cascaded lookup table, wherein when N is greater than 3, the method further comprises:
reducing (S301) a quantity of levels in possible levels of each of one or more edge symbols except a highest level and a lowest level, wherein the one or more edge symbols are symbols in the first symbol sequence or the symbol sub-sequences except the center symbol and a symbol adjacent to the center symbol.

2. The method according to claim 1, wherein when a quantity of symbols between a first edge symbol and the center symbol is less than a quantity of symbols between a second edge symbol and the center symbol, a quantity of possible levels of the first edge symbol after the quantity of levels is reduced is not less than a quantity of possible levels of the second edge symbol after the quantity of levels is reduced, wherein
the first edge symbol, the second edge symbol, and the center symbol are all comprised in a same symbol sequence.

3. A lookup table generation apparatus, comprising:
a division module (81), configured to divide (S101) a first symbol sequence into two symbol sub-sequences, wherein symbols that are from the first symbol to a center symbol in the first symbol sequence form one symbol sub-sequence, and symbols that are from the center symbol to the last symbol in the first symbol sequence form the other symbol sub-sequence; the first symbol sequence is any symbol sequence in a preset group of Z N symbol sequences of a length of N symbols each; when N is an odd number, the center symbol is the (N+1)/2^{th} symbol in the first symbol sequence, and when N is an even number, the center symbol is the N/2^{th} symbol or the N/2+1^{th} symbol in the first symbol sequence; and N is an integer not less than 3;
a calculation module (82), configured to perform statistical averaging (S102) on each symbol sub-sequence, and calculate a corresponding non-linear deviation value according to a result of the statistical averaging; and
a construction module (83), configured to correspondingly store (S103) the symbol sub-sequence in which the center symbol is the last symbol and the corresponding non-linear deviation value of the symbol sub-sequence to form a first lookup table in a cascaded lookup table, and correspondingly store (S104) the symbol sub-sequence in which the center symbol is the first symbol and the corresponding non-linear deviation value of the symbol sub-sequence to form a second lookup table in the cascaded lookup table,
wherein when N is greater than 3, the apparatus further comprises a compression module (91); and the compression module is configured to reduce (S301) a quantity of levels in possible levels of each of one or more edge symbols except a highest level and a lowest level, wherein the one or more edge symbols are symbols in the first symbol sequence or the symbol sub-sequences except the center symbol and a symbol adjacent to the center symbol.

4. The apparatus according to claim 3, wherein when a quantity of symbols between a first edge symbol and the center symbol is less than a quantity of symbols between a second edge symbol and the center symbol, a quantity of possible levels of the first edge symbol after the quantity of levels is reduced is not less than a quantity of possible levels of the second edge symbol after the quantity of levels is reduced, wherein
the first edge symbol, the second edge symbol, and the center symbol are all comprised in a same symbol sequence.

5. A pre-compensation method for performing, by using a first lookup table and a second lookup table that are generated by using the lookup table generation method according to claims 1 or 2, compensation on a series of N symbol sequences of a length of N symbols each divided from an electrical input signal, wherein the pre-compensation method comprises:
for an N symbol sequence of the series of N symbol sequences, searching the first lookup table for a non-linear deviation value of a symbol sub-sequence that comprises symbols that are from the first symbol to a center symbol in the N symbol sequence, and searching the second lookup table for a non-linear deviation value of a symbol sub-sequence that comprises symbols that are from the center symbol to the last symbol in the N symbol sequence; and
summating the N symbol sequence, the non-linear deviation value found from the first lookup table, and the non-linear deviation value found from the second lookup table, to obtain a predistorted symbol sequence of the N symbol sequence.

6. A pre-compensation apparatus configured to perform, by using a first lookup table and a second lookup table that are generated by using the lookup table generation method according to claims 1 or 2, compensation on a series of N symbol sequences of a length of N symbols each divided from an electrical input signal, wherein the pre-compensation apparatus comprises:
a search module (121), configured to: for an N symbol sequence of the series of N symbol sequences, search the first lookup table for a non-linear deviation value of a symbol sub-sequence that comprises symbols that are from the first symbol to a center symbol in the N symbol sequence, and search the second lookup table for a non-linear deviation value of a symbol sub-sequence that comprises symbols that are from the center symbol to the last symbol in the N symbol sequence; and
a summation module (122), configured to summate the N symbol sequence, the non-linear deviation value found from the first lookup table, and the non-linear deviation value found from the second lookup table, to obtain a predistorted symbol sequence of the N symbol sequence.

## Patentansprüche

1. Nachschlagtabellenerzeugungsverfahren, das Folgendes umfasst:
Teilen (S101) einer erste Symbolfolge in zwei Untersymbolfolgen, wobei Symbole, die vom ersten Symbol zu einem mittleren Symbol in der ersten Symbolfolge stammen, eine Untersymbolfolge bilden und Symbole, die vom mittleren Symbol zum letzten Symbol in der ersten Symbolfolge stammen, die andere Untersymbolfolge bilden; wobei die erste Symbolfolge eine beliebige Symbolfolge in einer voreingestellten Gruppe von Folgen von N Symbolen einer Länge von jeweils N Symbolen ist; wobei
dann, wenn N eine ungerade Zahl ist, das mittlere Symbol das (N + 1) / 2-te Symbol in der ersten Symbolfolge ist, und wenn N eine gerade Zahl ist, das mittlere Symbol das N / 2-te Symbol oder das N / 2 + 1-te Symbol in der ersten Symbolfolge ist und N eine ganze Zahl nicht kleiner als 3 ist;
Durchführen (S102) eines statistischen Mittelns an jeder Untersymbolfolge und Berechnen eines entsprechenden nichtlinearen Abweichungswertes gemäß einem Ergebnis des statistischen Mittelns;
entsprechendes Speichern (S103) der Untersymbolfolge, in der das mittlere Symbol das letzte Symbol ist, und des entsprechenden nichtlinearen Abweichungswertes der Untersymbolfolge, um eine erste Nachschlagtabelle in einer kaskadierten Nachschlagtabelle zu bilden; und
entsprechendes Speichern (S104) der Untersymbolfolge, in der das mittlere Symbol das erste Symbol ist und des entsprechenden nichtlinearen Abweichungswertes der Untersymbolfolge, um eine zweite Nachschlagtabelle in der kaskadierten Nachschlagtabelle zu bilden, wobei dann, wenn N größer als 3 ist, das Verfahren ferner Folgendes umfasst:
Verringern (S301) einer Anzahl von Stufen in möglichen Stufen von jedem von einem oder mehreren Flankensymbolen außer einer höchsten Stufe und einer niedrigsten Stufe, wobei das eine oder die mehreren Flankensymbole Symbole in der ersten Symbolfolge oder den Untersymbolfolgen außer dem mittleren Symbol und einem Symbol, das dem mittleren Symbol benachbart ist, sind.

2. Verfahren nach Anspruch 1, wobei dann, wenn eine Symbolanzahl zwischen einem ersten Flankensymbol und dem mittleren Symbol geringer als eine Symbolanzahl zwischen einem zweiten Flankensymbol und dem mittleren Symbol ist, eine Anzahl möglicher Stufen des ersten Flankensymbols, nachdem die Anzahl von Stufen verringert worden ist, nicht geringer als eine Anzahl möglicher Stufen des zweiten Flankensymbols, nachdem die Anzahl von Stufen verringert worden ist, ist, wobei das erste Flankensymbol, das zweiten Flankensymbol und das mittlere Symbol alle in derselben Symbolfolge enthalten sind.

3. Nachschlagtabellenerzeugungsvorrichtung, die Folgendes umfasst:
ein Teilungsmodul (81), das konfiguriert ist, eine erste Symbolfolge in zwei Untersymbolfolgen zu teilen (S101), wobei Symbole, die vom ersten Symbol zu einem mittleren Symbol in der ersten Symbolfolge stammen, eine Untersymbolfolge bilden und Symbole, die vom mittleren Symbol zum letzten Symbol in der ersten Symbolfolge stammen, die andere Untersymbolfolge bilden; wobei die erste Symbolfolge eine beliebige Symbolfolge in einer voreingestellten Gruppe von N Symbolfolgen einer Länge von jeweils N Symbolen ist; wobei dann, wenn N eine ungerade Zahl ist, das mittlere Symbol das (N+1)/2-te Symbol in der ersten Symbolfolge ist, und wenn N eine gerade Zahl ist, das mittlere Symbol das N / 2-te Symbol oder das N / 2 + 1-te Symbol in der ersten Symbolfolge ist und N eine ganze Zahl nicht kleiner als 3 ist;
ein Berechnungsmodul (82), das konfiguriert ist, ein statistisches Mitteln (S102) an jeder Untersymbolfolge durchzuführen und einen entsprechenden nichtlinearen Abweichungswert gemäß einem Ergebnis des statistischen Mittelns zu berechnen; und
ein Konstruktionsmodul (83), das konfiguriert ist, entsprechend die Untersymbolfolge, in der das mittlere Symbol das letzte Symbol ist, und den entsprechenden nichtlinearen Abweichungswert der Untersymbolfolge zu speichern (S103), um eine erste Nachschlagtabelle in einer kaskadierten Nachschlagtabelle zu bilden, und entsprechend die Untersymbolfolge, in der das mittlere Symbol das erste Symbol ist und den entsprechenden nichtlinearen Abweichungswert der Untersymbolfolge zu speichern (S104), um eine zweite Nachschlagtabelle in der kaskadierten Nachschlagtabelle zu bilden, wobei
dann, wenn N größer als 3 ist, die Vorrichtung ferner ein Kompressionsmodul (91) umfasst und das Kompressionsmodul konfiguriert ist, eine Anzahl von Stufen in möglichen Stufen von jedem von einem oder mehreren Flankensymbolen außer einer höchsten Stufe und einer niedrigsten Stufe zu verringern (S301), wobei das eine oder die mehreren Flankensymbole Symbole in der ersten Symbolfolge oder den Untersymbolfolgen außer dem mittleren Symbol und einem Symbol, das dem mittleren Symbol benachbart ist, sind.

4. Vorrichtung nach Anspruch 3, wobei dann, wenn eine Symbolanzahl zwischen einem ersten Flankensymbol und dem mittleren Symbol geringer als eine Symbolanzahl zwischen einem zweiten Flankensymbol und dem mittleren Symbol ist, eine Anzahl möglicher Stufen des ersten Flankensymbols, nachdem die Anzahl von Stufen verringert worden ist, nicht geringer als eine Anzahl möglicher Stufen des zweiten Flankensymbols, nachdem die Anzahl von Stufen verringert worden ist, ist, wobei das erste Flankensymbol, das zweiten Flankensymbol und das mittlere Symbol alle in derselben Symbolfolge enthalten sind.

5. Vorkompensationsverfahren, um unter Verwendung einer ersten Nachschlagtabelle und einer zweiten Nachschlagtabelle, die unter Verwendung des Nachschlagtabellenerzeugungsverfahrens nach Anspruch 1 oder 2 erzeugt werden, eine Kompensation an einer Reihe von N Symbolfolgen einer Länge von N Symbolen, die jeweils von einem elektrischen Eingangssignal abgeteilt werden, durchzuführen, wobei das Vorkompensationsverfahren Folgendes umfasst:
für eine Folge von N Symbolen aus der Reihe von Folgen von N Symbolen Durchsuchen der ersten Nachschlagtabelle nach einem nichtlinearen Abweichungswert einer Untersymbolfolge, die Symbole umfasst, die vom ersten Symbol zu einem mittleren Symbol in der Folge von N Symbolen stammen, und Durchsuchen der zweiten Nachschlagtabelle nach einem nichtlinearen Abweichungswert einer Untersymbolfolge, die Symbole umfasst, die vom mittleren Symbol zum letzten Symbol in der Folge von N Symbolen stammen; und
Summieren der Folge von N Symbolen, des nichtlinearen Abweichungswertes, der aus der ersten Nachschlagtabelle gefunden worden ist, und des nichtlinearen Abweichungswertes, der aus der zweiten Nachschlagtabelle gefunden worden ist, um eine vorverzerrte Symbolfolge der Folge von N Symbolen zu erhalten.

6. Vorkompensationsvorrichtung, die konfiguriert ist, unter Verwendung einer ersten Nachschlagtabelle und einer zweiten Nachschlagtabelle, die unter Verwendung des Nachschlagtabellenerzeugungsverfahrens nach Anspruch 1 oder 2 erzeugt wurden, eine Kompensation an einer Reihe von Folge von N Symbolen einer Länge von jeweils N Symbolen, die von einem elektrischen Eingangssignal abgeteilt werden, durchzuführen, wobei die Vorkompensationsvorrichtung Folgendes umfasst:
ein Suchmodul (121), das konfiguriert ist, für eine Folge von N Symbolen aus der Reihe von Folgen von N Symbolen die erste Nachschlagtabelle nach einem nichtlinearen Abweichungswert einer Untersymbolfolge, die Symbole umfasst, die vom ersten Symbol zu einem mittleren Symbol in der Folge von N Symbolen stammen, zu durchsuchen und die zweite Nachschlagtabelle nach einem nichtlinearen Abweichungswert einer Untersymbolfolge, die Symbole umfasst, die vom mittleren Symbol zum letzten Symbol in der Folge von N Symbolen stammen, zu durchsuchen; und
ein Summierungsmodul (122), das konfiguriert ist, die Folgen von N Symbolen, den nichtlinearen Abweichungswert, der aus der ersten Nachschlagtabelle gefunden worden ist, und den nichtlinearen Abweichungswert, der aus der zweiten Nachschlagtabelle gefunden worden ist, zu summieren, um eine vorverzerrte Symbolfolge der Folge von N Symbolen zu erhalten.

## Revendications

1. Procédé de génération de table de consultation, comportant les étapes consistant à :
diviser (S101) une première séquence de symboles en deux sous-séquences de symboles, des symboles qui vont du premier symbole à un symbole central dans la première séquence de symboles formant une sous-séquence de symboles, et des symboles qui vont du symbole central au dernier symbole dans la première séquence de symboles formant l'autre sous-séquence de symboles ; la première séquence de symboles est une séquence quelconque de symboles dans un groupe préétabli de séquences à N symboles d'une longueur de N symboles chacune ;
lorsque N est un nombre impair, le symbole central étant le (N+1)/^{2ème} symbole dans la première séquence de symboles, et lorsque N est un nombre pair, le symbole central étant le N/2^{ème} symbole ou le N/2+1^{ème} symbole dans la première séquence de symboles ; et N étant un entier qui n'est pas inférieur à 3 ;
effectuer (S102) une opération de moyenne statistique sur chaque sous-séquence de symboles, et calculer une valeur correspondante d'écart non linéaire selon un résultat de l'opération de moyenne statistique ;
stocker (S103) de manière correspondante la sous-séquence de symboles dans laquelle le symbole central est le dernier symbole et la valeur correspondante d'écart non linéaire de la sous-séquence de symboles pour former une première table de consultation dans une table de consultation en cascade ; et
stocker (S104) de manière correspondante la sous-séquence de symboles dans laquelle le symbole central est le premier symbole et la valeur correspondante d'écart non linéaire de la sous-séquence de symboles pour former une deuxième table de consultation dans la table de consultation en cascade, le procédé comportant en outre, lorsque N est supérieur à 3, l'étape consistant à :
réduire (S301) une quantité de niveaux dans des niveaux possibles de chaque symbole parmi un ou plusieurs symboles de bord à l'exception d'un niveau le plus haut et d'un niveau le plus bas, le ou les symboles de bord étant des symboles dans la première séquence de symboles ou les sous-séquences de symboles à l'exception du symbole central et d'un symbole adjacent au symbole central.

2. Procédé selon la revendication 1, lorsqu'une quantité de symboles entre un premier symbole de bord et le symbole central est inférieure à une quantité de symboles entre un deuxième symbole de bord et le symbole central, une quantité de niveaux possibles du premier symbole de bord après que la quantité de niveaux a été réduite n'étant pas inférieure à une quantité de niveaux possibles du deuxième symbole de bord après que la quantité de niveaux a été réduite,
le premier symbole de bord, le deuxième symbole de bord, et le symbole central étant tous compris dans une même séquence de symboles.

3. Appareil de génération de table de consultation, comportant :
un module (81) de division, configuré pour diviser (S101) une première séquence de symboles en deux sous-séquences de symboles, des symboles qui vont du premier symbole à un symbole central dans la première séquence de symboles formant une sous-séquence de symboles, et des symboles qui vont du symbole central au dernier symbole dans la première séquence de symboles formant l'autre sous-séquence de symboles ; la première séquence de symboles est une séquence quelconque de symboles dans un groupe préétabli de séquences à N symboles d'une longueur de N symboles chacune ; lorsque N est un nombre impair, le symbole central étant le (N+1)/2^{ème} symbole dans la première séquence de symboles, et lorsque N est un nombre pair, le symbole central étant le N/2^{ème} symbole ou le N/2+1^{ème} symbole dans la première séquence de symboles ; et N étant un entier qui n'est pas inférieur à 3 ;
un module (82) de calcul, configuré pour effectuer (S102) une opération de moyenne statistique sur chaque sous-séquence de symboles, et calculer une valeur correspondante d'écart non linéaire selon un résultat de l'opération de moyenne statistique ; et
un module (83) de construction, configuré pour stocker (S103) de manière correspondante la sous-séquence de symboles dans laquelle le symbole central est le dernier symbole et la valeur correspondante d'écart non linéaire de la sous-séquence de symboles pour former une première table de consultation dans une table de consultation en cascade, et stocker (S104) de manière correspondante la sous-séquence de symboles dans laquelle le symbole central est le premier symbole et la valeur correspondante d'écart non linéaire de la sous-séquence de symboles pour former une deuxième table de consultation dans la table de consultation en cascade, lorsque N est supérieur à 3, l'appareil comportant en outre un module (91) de compression ; et le module de compression étant configuré pour réduire (S301) une quantité de niveaux dans des niveaux possibles de chaque symbole parmi un ou plusieurs symboles de bord à l'exception d'un niveau le plus haut et d'un niveau le plus bas, le ou les symboles de bord étant des symboles dans la première séquence de symboles ou les sous-séquences de symboles à l'exception du symbole central et d'un symbole adjacent au symbole central.

4. Appareil selon la revendication 3, lorsqu'une quantité de symboles entre un premier symbole de bord et le symbole central est inférieure à une quantité de symboles entre un deuxième symbole de bord et le symbole central, une quantité de niveaux possibles du premier symbole de bord après que la quantité de niveaux a été réduite n'étant pas inférieure à une quantité de niveaux possibles du deuxième symbole de bord après que la quantité de niveaux a été réduite,
le premier symbole de bord, le deuxième symbole de bord, et le symbole central étant tous compris dans une même séquence de symboles.

5. Procédé de précompensation destiné à effectuer, en utilisant une première table de consultation et une deuxième table de consultation qui sont générées en utilisant le procédé de génération de table de consultation selon les revendications 1 ou 2, une compensation sur une série de séquences à N symboles d'une longueur de N symboles chacune, divisées à partir d'un signal d'entrée électrique, le procédé de précompensation comportant les étapes consistant :
pour une séquence à N symboles de la série de séquences à N symboles, à explorer la première table de consultation à la recherche d'une valeur d'écart non linéaire d'une sous-séquence de symboles qui comporte des symboles qui vont du premier symbole à un symbole central dans la séquence à N symboles, et à explorer la deuxième table de consultation à la recherche d'une valeur d'écart non linéaire d'une sous-séquence de symboles qui comporte des symboles qui vont du symbole central au dernier symbole dans la séquence à N symboles ; et
à sommer la séquence à N symboles, la valeur d'écart non linéaire trouvée à partir de la première table de consultation, et la valeur d'écart non linéaire trouvée à partir de la deuxième table de consultation, pour obtenir une séquence de symboles pré-distordue de la séquence à N symboles.

6. Appareil de précompensation configuré pour effectuer, en utilisant une première table de consultation et une deuxième table de consultation qui sont générées en utilisant le procédé de génération de table de consultation selon les revendications 1 ou 2, une compensation sur une série de séquences à N symboles d'une longueur de N symboles chacune, divisées à partir d'un signal d'entrée électrique, l'appareil de précompensation comportant :
un module (121) de recherche, configuré : pour une séquence à N symboles de la série de séquences à N symboles, pour explorer la première table de consultation à la recherche d'une valeur d'écart non linéaire d'une sous-séquence de symboles qui comporte des symboles qui vont du premier symbole à un symbole central dans la séquence à N symboles, et pour explorer la deuxième table de consultation à la recherche d'une valeur d'écart non linéaire d'une sous-séquence de symboles qui comporte des symboles qui vont du symbole central au dernier symbole dans la séquence à N symboles ; et
un module (122) de sommation, configuré pour sommer la séquence à N symboles, la valeur d'écart non linéaire trouvée à partir de la première table de consultation, et la valeur d'écart non linéaire trouvée à partir de la deuxième table de consultation, pour obtenir une séquence de symboles pré-distordue de la séquence à N symboles.
